# EUROPÄISCHE PATENTSCHRIFT

(11) **EP 2 735 370 B1**
(45) Veröffentlichungstag und Bekanntmachung des Hinweises auf die Patenterteilung: **01.04.2015**
(21) Anmeldenummer: 12194267.6
(22) Anmeldetag: 26.11.2012
(51) Int. Cl.: B02C 13/00, B02C 23/00, B23P 19/04, B02C 13/282

(54) **Schleißteilwechselvorrichtung**
Wearing part replacement apparatus
Dispositif de remplacement d'une pièce d'usure

(43) Veröffentlichungstag der Anmeldung: 28.05.2014
(73) Patentinhaber: Metso Lindemann GmbH, 40231 Düsseldorf (DE)
(72) Erfinder: van der Beek, August, 41515 Grevenbroich (DE); Köhl, Erich, 40667 Meerbusch (DE); Haßler, Martin, 40221 Düsseldorf (DE)
(74) Vertreter: Hoffmann Eitle

(56) Entgegenhaltungen:
- DD-A3- 142 123
- DE-U- 6 805 412
- US-A- 3 752 338
- US-A- 3 802 150

## Beschreibung

Die Erfindung betrifft eine Schleißteilwechselvorrichtung.

Industrielle Zerkleinerungsmaschinen, zum Beispiel Anlagen zum Zerkleinern von Reststoffen, beispielsweise Hammermühlen zum Zerkleinern von Autos, bestehen üblicherweise aus einem Gehäuse, in dem sich ein oder mehrere Zerkleinerungsaggregate befinden.

Ein typisches Zerkleinerungsaggregat bei einer Hammermühle ist ein Rotor, an dem Hämmer drehbar gelagert sind. Die Hämmer bilden den aktiven Teil des Zerkleinerungsaggregates, während Schleißplatten (Schleißbleche) an den Seitenwänden (Innenwänden) des Gehäuses korrespondierende passive Teile des Zerkleinerungsaggregats bilden.

Unterschiedlich gestaltete Schleißplatten werden an unterschiedlich stark beanspruchten Abschnitten im Inneren der Zerkleinerungsmaschine angeordnet.

Die EP 969 932 B1 und die EP 1 047 499 B1 zeigen verschiedene Bauarten einer solchen Zerkleinerungsmaschine, während die DE 195 38 144 B4 Beispiele zugehöriger Schleißteile offenbart.

Definitionsgemäß unterliegen Schleißteile einem zum Teil erheblichen Verschleiß und müssen entsprechend oft erneuert werden. Dies ist bei Anlagen der genannten Art deshalb besonders schwierig, weil die Schleißteile im Inneren einer großen Zerkleinerungsmaschine angeordnet und nur schwer erreichbar sind.

Bei einer Hammermühle zur Zerkleinerung ganzer Automobile sind die Schleißteile auch bei geöffnetem Zerkleinerungsraum oft nur schwer zu wechseln, insbesondere dann, wenn sie sich in annähernd horizontaler Lage unterhalb ihrer Befestigungsebene befinden.

Die Schleißteile sind an Maschinengehäuse auf unterschiedliche Art befestigt, oft mit Schrauben. Die Demontage solcher Schleißteile (Schleißbleche) wird bisher wie folgt ausgeführt:
Im geöffneten oder im geschlossenen Zustand der Zerkleinerungsmaschine werden die Befestigungsschrauben der zu wechselnden Schleißteile gelöst. Die Schleißteile fallen dann in den Zerkleinerungsraum. Dabei können Teile der Maschine beschädigt werden. Außerdem ist es schwierig, die Schleißteile anschließend zu greifen und herauszunehmen.

Ähnlich schwierig gestaltet sich die Montage neuer Schleißteile. Dazu werden Seile durch Löcher in der Gehäusewand geführt und durch mindestens zwei Bohrungen des zu montierenden Schleißteils gesteckt und fixiert. Mit Hilfe einer Krananlage wird das Schleißteil anschließend in die gewünschte Position gebracht und mit Maschinen befestigt. Auch dieses Verfahren ist weitgehend empirisch, wenig präzise, zeitaufwändig und umständlich.

Der Erfindung liegt insoweit die Aufgabe zugrunde, eine Möglichkeit aufzuzeigen, das Wechseln von Schleißteilen an industriellen Zerkleinerungsmaschinen zu optimieren. Dabei stehen folgende Gesichtspunkte im Vordergrund: Das Wechseln soll möglichst einfach, sicher, schnell und genau sein, ohne die Gefahr von Beschädigungen der Maschine.

Die Erfindung sieht dazu eine Schleißteilwechselvorrichtung vor, die ein autarkes Bauteil bildet und im Wesentlichen nur aus zwei Bauteilen besteht, nämlich:
- einem Gerüst, und
- einer an dem Gerüst befestigten Schablone.

Die Schablone hat die Aufgabe, die Schleißteile kraft- und/oder formschlüssig aufzunehmen (bei der Demontage) beziehungsweise form- und/ oder kraftschlüssig bereitzustellen (bei der Montage).

Das Gerüst hat die Aufgabe, die Schablone in die gewünschte Montage-/ Demontageposition zu bringen und dort so zu positionieren, dass der Wechsel/Austausch der Schleißplatten direkt zwischen Schablone und korrespondierendem Abschnitt der Zerkleinerungsmaschine erfolgen kann.

Zu diesem Zweck sieht die Erfindung in ihrer allgemeinsten Ausführungsform eine Schleißteilwechselvorrichtung mit folgenden Merkmalen vor:
- einem Gerüst,
- einer an dem Gerüst befestigten Schablone,
- die Schablone ist auf ihrer freien Oberfläche so gestaltet, dass sie mehrere zu wechselnde Schleißteile kraftschlüssig und in einer Anordnung aufnimmt, die der funktionsgemäßen Anordnung der Schleißteile an einer Maschine (Zerkleinerungsmaschine) entspricht, an der die Schleißteile gewechselt werden sollen.

Mit anderen Worten: bei der Demontage bildet die Schablone eine Art "Auffangvorrichtung" für die gelösten Schleißteile, damit diese nicht unkontrolliert und im freien Fall in und auf die Zerkleinerungsmaschine fallen, wie dies im Stand der Technik erfolgte. Die Schablone wird entsprechend in unmittelbare Nachbarschaft der montierten Schleißteile gebracht, so dass die Schleißteile, nach dem Lösen, allenfalls über eine kurze Strecke, beispielsweise nur wenige Zentimeter oder Millimeter, auf beziehungsweise in die Schablone fallen und von dieser sicher gehalten werden.

Entsprechend ist die freie Oberfläche der Schablone auszulegen (geometrisch zu gestalten). Nach einer Ausführungsform weist die freie Oberfläche der Schablone mindestens eine Vertiefung zur kraftschlüssigen und/oder formschlüssigen Aufnahme mindestens eines Schleißteils auf.

Vorzugsweise ist die freie Oberfläche der Schablone so ausgebildet, dass sie mindestens eine Vertiefung zur form- oder kraftschlüssigen Aufnahme mehrerer Schleißteile aufweist.

Die Vertiefung(en) ist/sind annähernd oder entsprechend komplementär zur Oberflächengeometrie der Schleißteile gestaltet.

Beispielsweise für ein Schleißteil mit konvexer freier Oberfläche ist die Vertiefung entsprechend komplementär konkav.

Zur kraft- beziehungsweise formschlüssigen Aufnahme der Schleißteile kann die freie Oberfläche der Schablone auch alternativ oder kumulativ mindestens einen Steg aufweisen, der von der freien Oberfläche absteht, also in Richtung auf das Gehäuse der Maschine, in der Montage- /Demontageposition.

Dieser Steg oder mehrere dieser Stege dienen zur Halterung (kraft- oder formschlüssig) korrespondierender Schleißteile nach der Demontage oder vor der Montage.

Der Steg kann so ausgeführt sein, dass mehrere Schleißteile an ihm platziert werden können. Der Steg kann durchlaufend, unterbrochen, kammartig oder dergleichen gestaltet sein.

Üblicherweise ist im Innenraum einer Zerkleinerungsmaschine der eingangs beschriebenen Art ein größerer Flächenabschnitt mit verschiedenen Schleißteilen, also Schleißteilen unterschiedlicher Größe und/oder unterschiedlicher Form vorhanden. Diese Schleißteile sind üblicherweise unmittelbar neben- beziehungsweise übereinander oder untereinander angeordnet, so dass sich insgesamt ein mehr oder weniger größerer Schleißteilabschnitt ergibt.

In einer optimierten Ausführungsform der erfindungsgemäßen Schleißteilvorrichtung ist dazu die freie Oberfläche der Schablone mit einer solchen Kontur ausgebildet, dass nach kraft-/formschlüssiger Aufnahme aller zugehöriger Schleißteile eine von den freien Oberflächen der Schleißteile gebildete Oberflächenkontur der Oberflächenkontur eines Abschnitts der zugehörigen Maschine entspricht, an der die Schleißteile gewechselt werden sollen, und entsprechend auch umgekehrt.

Mit anderen Worten: die freie Oberfläche der Schablone ist mindestens so groß wie die freie Oberfläche der Gesamtheit der Schleißteile, die an der Maschine montiert sind und die Oberflächengeometrie der Schablone ist komplementär zur Oberflächengeometrie der Gesamtheit der Schleißteile. Wenn die Schablone auf die Gesamtheit der Schleißteile aufgesetzt wird, ergibt sich dabei ein Formschluss zwischen Schablone und Schleißteilen.

Üblicherweise wird die Schleißteilwechselvorrichtung, und damit auch die Schablone, in geringem Abstand zu den Schleißteilen (beim Wechseln) angeordnet. Zu diesem Zweck sieht eine Ausführungsform der Erfindung vor, dass die Schablone unabhängig von einer Montageposition des Gerüstes in ihrer Position verstellbar ist. Dies kann beispielsweise durch entsprechende Gelenke, Kolben-/Zylinderanordnungen oder teleskopartige Montagearme am Gerüst erreicht werden.

Die Schablone kann auch durch eine Veränderung der Montageposition des Gerüstes in ihrer Position verstellt werden.

Das Gerüst wird beispielsweise in eine geöffnete Zerkleinerun.gsmaschine (zum Beispiel einer Hammermühle) eingesetzt und dort am Rahmen der Maschine (am Gehäuse der Maschine) in geeigneter Weise befestigt, um für die Montage/Demontage der Schleißplatten eine definierte Position sicherzustellen. Andere Befestigungen für das Gerüst sind möglich; das Gerüst hat nur die Aufgabe, die Schablone zu stabilisieren. Insoweit kann das Gerüst auch ein einziger Stützarm oder eine Art Stativ sein.

Bevor die Erfindung anhand eines Ausführungsbeispieles näher erläutert wird, soll das Verfahren zum Wechseln von Schleißteilen an einer industriellen Zerkleinerungsmaschine näher erläutert werden, wobei die Schleißteilwechselvorrichtung in mindestens einer Ausführungsform der vorgenannten Art ausgebildet ist. Dabei ergeben sich nachstehende, aufeinander folgende Arbeitsschritte:
- die Zerkleinerungsmaschine wird geöffnet und ein Abschnitt im Inneren der Zerkleinerungsmaschine freigelegt, an dem die zu wechselnden Schleißteile befestigt sind,
- das Gerüst mit Schablone wird in das Innere der Zerkleinerungsmaschine eingesetzt,
- Schablone und Zerkleinerungsmaschine werden so zueinander positioniert, dass die freie Oberfläche der Schablone dem Abschnitt der Zerkleinerungsmaschine gegenüberliegt, an dem die zu wechselnden Schleißteile befestigt sind,
- die zu wechselnden Schleißteile werden aus ihrer Montageposition an der Zerkleinerungsmaschine gelöst und fallen auf die Schablone, an der oder auf der sie in einer korrespondierenden Montageposition kraftschlüssig gehalten werden,
- Schablone und Zerkleinerungsmaschine werden so zueinander positioniert, dass die zu wechselnden Schleißteile von der Schablone abgenommen und neue Schleißteile auf die Schablone kraftschlüssig aufgesetzt werden,
- Schablone und Zerkleinerungsmaschine werden so zueinander positioniert, dass die freie Oberfläche der neuen Schleißteile dem Abschnitt im Inneren der Zerkleinerungsmaschine gegenüberliegt, an dem die neuen Schleißteile befestigt werden sollen,
- die neuen Schleißteile werden an diesem Abschnitt der Zerkleinerungsmaschine befestigt,
- das Gerüst mit Schablone wird aus dem Inneren der Zerkleinerungsmaschine entnommen.

Anhand dieser Verfahrensbeschreibung wird noch einmal deutlich, dass das Prinzip der Erfindung darin liegt, eine industrielle Maschine mit Schleißteilen
- zunächst zu öffnen
- damit die Schleißteile freizulegen
- ein Gerüst mit Schablone einzusetzen
- die Schleißteile dann zu lösen, damit sie auf beziehungsweise in die Schablone fallen
- anschließend die Schleißteile von der Schablone zu entnehmen
- neue Schleißteile auf die Schablone aufzusetzen und die Schablone wieder so zu positionieren, dass die neuen Schleißteile anschließend unmittelbar an die gewünschte Position im Maschineninnenraum gebracht werden können, ohne dass zusätzliche Hilfsmittel, Maschinen oder dergleichen notwendig wären.

Die Befestigung der Schleißteile an dem erwähnten Abschnitt im Maschinen-Innenraum kann auf unterschiedliche Art erfolgen. Eine Möglichkeit ist, die Schleißteile am Gehäuse der Maschine zu verschrauben.

Eine Verfahrensvariante sieht dazu vor, dass die Schleißteile durch Lösen von Schrauben auf die Schablone fallen und durch Anziehen von Schrauben von der Schablone gegen den Abschnitt der Zerkleinerungsmaschine gezogen werden.

Die Schrauben greifen dabei durch Löcher/Bohrungen im Maschinengehäuse. Bei der Montage werden die Schleißplatten gegen das Gehäuse gezogen, bei der Demontage vom Gehäuse weg bewegt, bis sie vollständig gelöst sind und auf die Schablone fallen.

Bei einer anderen Befestigungstechnik weisen die Schleißteile auf ihrer Rückseite (das ist die Seite, die am Gehäuse anliegt, wenn die Teile befestigt sind) einen oder mehrere Stege, Stifte oder dergleichen auf, die in korrespondierenden Gehäuseabschnitten verrastet/entrastet werden oder die durch entsprechende Öffnungen im Gehäuse hindurchgesteckt und dann außen verriegelt werden, beispielsweise durch Keile, Splinte oder dergleichen. Wenn diese Keile oder Splinte gezogen werden lösen sich die Schleißteile aus der Befestigungsposition und fallen auf die Schablone

Die Vorrichtung und das Verfahren lassen sich auch dann problemlos anwenden, wenn die Schleißteile in der Montageposition und/oder in der geöffneten Position der Maschine im Wesentlichen horizontal ausgerichtet sind und unterhalb einer Befestigungsebene liegen, weil das Gerüst mit der Schablone ohne Weiteres unterhalb dieser Befestigungsebene und unterhalb der zugehörigen Schleißteile angeordnet werden kann.

Bei dem vorstehend beschriebenen Lösen der Schleißteile können diese in korrespondierende Vertiefungen auf der freien Oberfläche der Schablone fallen und dort formschlüssig aufgenommen werden.

Ebenso ist es möglich, dass zumindest einige der zu wechselnden Schleißteile gegen korrespondierende Stege auf der freien Oberfläche der Schablone fallen und von diesen Stegen kraftschlüssig festgehalten werden. Die Funktion eines Stegs kann anlog von einem Absatz auf der Oberfläche der Schablone erfüllt werden, wie die folgende Figurenbeschreibung zeigt.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert. Dabei zeigen -jeweils in schematisierter Darstellung-
- Figur 1:: einen Querschnitt durch eine großindustrielle Schreddermaschine in geöffnetem Zustand, wobei eine Schleißteilwechselvorrichtung in die offene Maschine eingesetzt ist,
- Figur 2:: die Schleißteilwechselvorrichtung in dreidimensionaler Darstellung mit einigen aufliegenden Schleißteilen,
- Figur 3:: einen Teil der Schleißteilwechselvorrichtung gemäß Figur 2 in Zuordnung zu der Schreddermaschine gemäß Fig. 1 bei der Montage neuer Schleißplatten.

In den Figuren sind gleiche oder gleich wirkende Bauteile mit gleichen Bezugsziffern dargestellt.

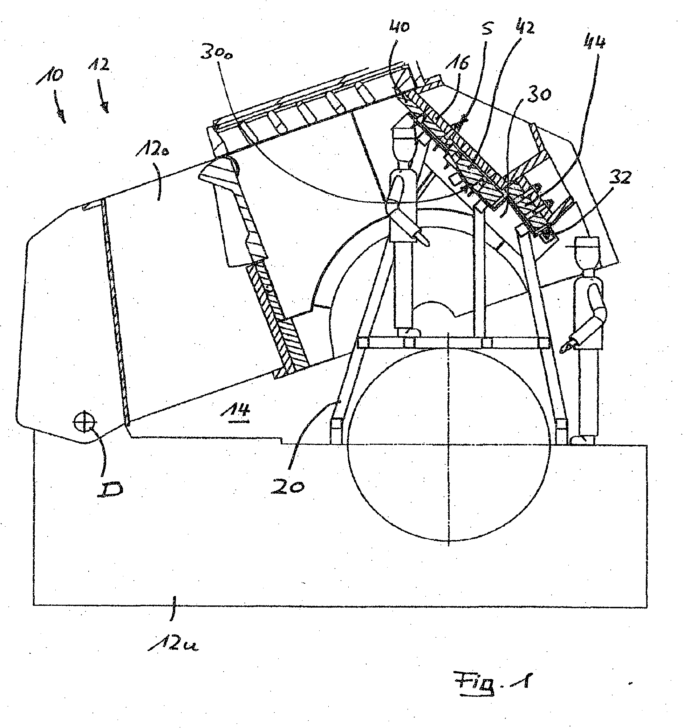

Figur 1 zeigt einen großindustriellen Schredder 10, wie er grundsätzlich aus der EP 969 932 B1 bekannt ist und deshalb hier nicht näher beschrieben wird. Das Schreddergehäuse 12 besteht aus einem Unterteil 12u und einem Oberteil 12o. Nach dem Öffnen des Schreddergehäuses (Aufklappen des Oberteils 12o) wurde ein Gerüst 20 mit einer am oberen Ende befestigten Schablone 30 in einen Innenraum 14 des Schreddergehäuses 12 eingesetzt und das Schreddergehäuse 12 teilweise wieder geschlossen (Figur 1). Dies erfolgte bis in eine Position, bei der ein Abschnitt 16 des Oberteils 12o des Gehäuses 12, an dem Schleißbleche 40, 42, 44 befestigt sind, unmittelbar gegenüber einer korrespondierend gestalteten Oberfläche 30o der Schablone 30 liegt, wie in Figur 1 dargestellt.

In dem Ausführungsbeispiel ist die Schleißplatte 40 im Wesentlichen quaderförmig, Gleiches gilt für weitere Schleißplatten, die in einer horizontalen Ebene neben der Schleißplatte 40 (senkrecht zur Zeichenebene) verlaufen.

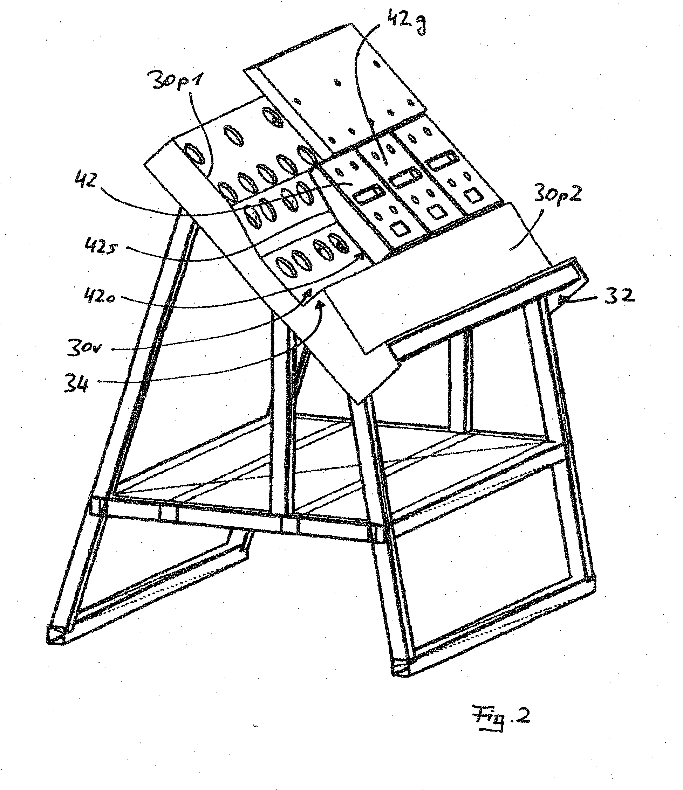

Die Schleißplatte 42, und ebenso benachbarte Schleißplatten, weisen eine planare Grundfläche 42g und eine Oberfläche 42o auf, die durch eine Schrägfläche 42s gekennzeichnet ist (Figur 2).

Die Schleißbleche 44 sind quaderförmig, jedoch dicker als die Schleißbleche 40 ausgebildet und verlaufen in einer Ebene, die unter einem Winkel von ca. 5° zur Ebene verläuft, auf der die Schleißbleche 40, 42 angeordnet sind.

Die Schablone 30 hat eine komplementäre Oberflächenkontur, mit einer Vertiefung 30v, einer zugehörigen Stufe 34, und zwei planaren Abschnitten 30p1 und 30p2 oberhalb und unterhalb der Vertiefung 30v, wobei der Abschnitt 30p1 parallel zu den Schleißplatten 40 und der Abschnitt 30p2 parallel zu den Schleißplatten 44 angeordnet ist (Figur 2).

Zum Wechseln der Schleißplatten werden Schrauben S gelöst. Die Schleißplatten 40, 42, 44 fallen dann auf die Schablone 30 beziehungsweise auf/in die entsprechenden Abschnitte 30p1, 30v, 30p2 und werden dort über entsprechende Stege 32 (für die Schleißbleche 44), 34 (für die Schleißbleche 42) gehalten beziehungsweise stoßen unmittelbar aneinander an (Schleißbleche 40, 42).

Diese Zuordnung der Schleißplatten 40, 42, 44 lässt sich Figur 2 analog entnehmen.

Das Gerüst ist während des Demontageschritts am Gehäuseunterteil 12u der Maschine 10 befestigt.

Im nächsten Schritt wird der Gehäuseoberteil 12o vollständig geöffnet (durch Verschwenken um das Drehlager D gegen den Uhrzeigersinn), die verbrauchten Schleißplatten 40, 42, 44 können über eine Krananlage entnommen werden. Anschließend werden neue Schleißbleche 40, 42, 44 auf die Schablone 30 aufgesetzt.

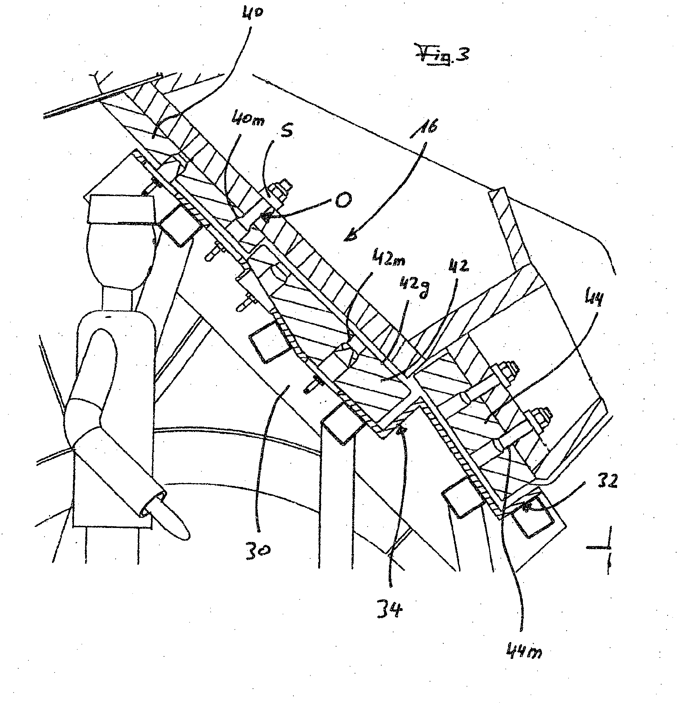

Danach wird das Maschinengehäuse 12 wieder in die in Figur 1 dargestellte Position verfahren, die im Wesentlichen der in Figur 3 dargestellten Montageposition entspricht.

Bei der Montage werden die Schrauben S durch korrespondierende Öffnungen O im Gehäuse 10 geführt, bis sie die korrespondierenden Montageöffnungen 40m, 42m, 44m innerhalb der Schleißteile 40, 42, 44 erreichen. Beim weiteren Anziehen der Schrauben S werden die Schleißteile 40, 42, 44 gegen den korrespondierenden Gehäuseabschnitt 16 gezogen, bis sie wieder die in Figur 1 dargestellte Montageposition erreicht haben. In Figur 3 ist eine Situation dargestellt, bei der die neuen Schleißplatten 40,44 bereits am Abschnitt 16 des Oberteils 12o des Gehäuses 12 befestigt sind, während die Schließplatten 42 noch auf der Schablone 30 liegen, also noch einen Abstand zum Gehäuse 12 aufweisen.

Danach wird das Gehäuse 12 ein letztes Mal vollständig geöffnet und das Gerüst 20 mit Schablone 30 entnommen.

Danach kann das Gehäuse 12 geschlossen werden und die Zerkleinerungsmaschine 10 steht dem normalen Betrieb zur Verfügung.

## Patentansprüche

1. Schleißteilwechselvorrichtung mit folgenden Merkmalen:
1.1 einem Gerüst (20)
1.2 einer an dem Gerüst (20) befestigten Schablone (30),
1.3 die Schablone (30) ist auf ihrer freien Oberfläche so gestaltet, dass sie mehrere zu wechselnde Schleißteile (40, 42, 44) kraftschlüssig und in einer Anordnung aufnimmt, die der funktionsgemäßen Anordnung der Schleißteile (40, 42, 44) an einer Maschine (10) entspricht, an der die Schleißteile (40, 42, 44) gewechselt werden sollen.

2. Schleißteilwechselvorrichtung nach Anspruch 1, bei der die freie Oberfläche der Schablone (30) mindestens eine Vertiefung (30v) zur kraftschlüssigen Aufnahme mindestens eines Schleißteils (42) aufweist.

3. Schleißteilwechselvorrichtung nach Anspruch 1, bei der die freie Oberfläche der Schablone (30) mindestens eine Vertiefung (30v) zur formschlüssigen Aufnahme mindestens eines Schleißteils (42) aufweist.

4. Schleißteilwechselvorrichtung nach Anspruch 1, bei der die freie Oberfläche der Schablone (30) mindestens eine Vertiefung (30v) zur kraftschlüssigen Aufnahme mehrerer Schleißteile (42) aufweist.

5. Schleißteilwechselvorrichtung nach Anspruch 1, bei der die freie Oberfläche der Schablone (30) mindestens eine Vertiefung (30v) zur formschlüssigen Aufnahme mehrerer Schleißteile (42) aufweist.

6. Schleißteilwechselvorrichtung nach Anspruch 1, bei der die freie Oberfläche der Schablone (30) mindestens einen von der freien Oberfläche vorstehenden Steg (32) zur kraftschlüssigen Aufnahme mindestens eines Schleißteils (44) aufweist.

7. Schleißteilwechselvorrichtung nach Anspruch 1, bei der die freie Oberfläche der Schablone (30) mindestens einen von der freien Oberfläche vorstehenden Steg (32) zur formschlüssigen Aufnahme mindestens eines Schleißteils (44) aufweist.

8. Schleißteilwechselvorrichtung nach Anspruch 1, bei der die freie Oberfläche der Schablone (30) mindestens einen von der freien Oberfläche vorstehenden Steg (32) zur kraftschlüssigen Aufnahme mehrerer Schleißteile (44) aufweist.

9. Schleißteilwechselvorrichtung nach Anspruch 1, bei der die freie Oberfläche der Schablone (30) mindestens einen von der freien Oberfläche vorstehenden Steg (32) zur formschlüssigen Aufnahme mehrerer Schleißteile (44) aufweist.

10. Schleißteilwechselvorrichtung nach Anspruch 1, bei der die freie Oberfläche der Schablone (30) eine solche Kontur aufweist, dass nach kraftschlüssiger Aufnahme aller zugehörigen Schleißteile (40, 42, 44) eine von den freien Oberflächen der Schleißteile (40, 42, 44) gebildete Oberflächenkontur der Oberflächenkontur eines Abschnitts (16) der zugehörigen Maschine (10) entspricht, an der die Schleißteile (40, 42, 44) gewechselt werden sollen.

11. Schleißteilwechselvorrichtung nach Anspruch 1, bei der die Schablone (30) unabhängig von einer Montageposition des Gerüsts (20) in ihrer Position verstellbar ist.

12. Schleißteilwechselvorrichtung nach Anspruch 1, bei der die Schablone (30) durch eine Veränderung einer Montageposition des Gerüsts (20) in ihrer Position verstellbar ist.

13. Verfahren zum Wechseln von Schleißteilen an einer industriellen Zerkleinerungsmaschine mit einer Schleißteilwechselvorrichtung nach einem der Ansprüche 1-12 durch Anwendung nachstehender, aufeinanderfolgender Arbeitsschritte:
a) die Zerkleinerungsmaschine wird geöffnet und ein Abschnitt im Inneren der Zerkleinerungsmaschine freigelegt, an dem die zu wechselnden Schleißteile befestigt sind,
b) das Gerüst mit Schablone wird in das Innere der Zerkleinerungsmaschine eingesetzt,
c) Schablone und Zerkleinerungsmaschine werden so zueinander positioniert, dass die freie Oberfläche der Schablone dem Abschnitt der Zerkleinerungsmaschine gegenüberliegt, an dem die zu wechselnden Schleißteile befestigt sind,
d) die zu wechselnden Schleißteile werden aus ihrer Montageposition an der Zerkleinerungsmaschine gelöst und fallen auf die Schablone, an der oder auf der sie in einer korrespondierenden Montageposition kraftschlüssig gehalten werden,
e) Schablone und Zerkleinerungsmaschine werden so zueinander positioniert, dass die zu wechselnden Schleißteile von der Schablone abgenommen und neue Schleißteile auf die Schablone kraftschlüssig aufgesetzt werden können,
f) Schablone und Zerkleinerungsmaschine werden so zueinander positioniert, dass die freie Oberfläche der neuen Schleißteile dem Abschnitt im Inneren der Zerkleinerungsmaschine gegenüberliegt, an dem die neuen Schleißteile befestigt werden sollen,
g) die neuen Schleißteile werden an diesem Abschnitt der Zerkleinerungsmaschine befestigt,
h) das Gerüst mit Schablone wird aus dem Inneren der Zerkleinerungsmaschine entnommen.

14. Verfahren nach Anspruch 13, bei dem im Schritt d) zumindest einige der zu wechselnden Schleißteile in korrespondierende Vertiefungen auf der freien Oberfläche der Schablone fallen und dort formschlüssig aufgenommen werden.

15. Verfahren nach Anspruch 13, bei dem die Schleißteile im Schritt d) durch Lösen von Schrauben auf die Schablone fallen und im Schritt g) durch Anziehen von Schrauben von der Schablone gegen den Abschnitt der Zerkleinerungsmaschine gezogen werden.

## Claims

1. Wearing part replacement device having the following features:
1.1 a stand (20)
1.2 a template (30) attached to the stand (20),
1.3 the template (30) is designed on its free surface so that it receives several wearing parts (40, 42, 44) to be replaced non-positively and in an arrangement which corresponds to the functional arrangement of the wearing parts (40, 42, 44) on a machine (10), on which the wearing parts (40, 42, 44) are to be replaced.

2. Wearing part replacement device according to claim 1, in which the free surface of the template (30) has at least one depression (30v) for non-positive mounting of at least one wearing part (42).

3. Wearing part replacement device according to claim 1, in which the free surface of the template (30) has at least one depression (30v) for positive mounting of at least one wearing part (42).

4. Wearing part replacement device according to claim 1, in which the free surface of the template (30) has at least one depression (30v) for non-positive mounting of several wearing parts (42).

5. Wearing part replacement device according to claim 1, in which the free surface of the template (30) has at least one depression (30v) for positive mounting of several wearing parts (42).

6. Wearing part replacement device according to claim 1, in which the free surface of the template (30) has at least one bar (32) projecting from the free surface for non-positive mounting of at least one wearing part (44).

7. Wearing part replacement device according to claim 1, in which the free surface of the template (30) has at least one bar (32) projecting from the free surface for positive mounting of at least one wearing part (44).

8. Wearing part replacement device according to claim 1, in which the free surface of the template (30) has at least one bar (32) projecting from the free surface for non-positive mounting of several wearing parts (44).

9. Wearing part replacement device according to claim 1, in which the free surface of the template (30) has at least one bar (32) projecting from the free surface for positive mounting of several wearing parts (44).

10. Wearing part replacement device according to claim 1, in which the free surface of the template (30) has such a contour that after non-positive mounting of all associated wearing parts (40, 42, 44), a surface contour formed by the free surfaces of the wearing parts (40, 42, 44) corresponds to the surface contour of a section (16) of the associated machine (10), on which the wearing parts (40, 42, 44) are to be replaced.

11. Wearing part replacement device according to claim 1, in which the template (30) can be adjusted as regards its position independently of an assembly position of the stand (20).

12. Wearing part replacement device according to claim 1, in which the template (30) can be adjusted as regards its position by changing an assembly position of the stand (20).

13. Method for replacing wearing parts on an industrial comminution machine having a wearing part replacement device according to one of claims 1-12 by using the following successive working steps:
a) the comminution machine is opened and a section is exposed in the interior of the comminution machine, to which the wearing parts to be replaced are attached,
b) the stand with template is inserted into the interior of the comminution machine,
c) template and comminution machine are positioned with respect to one another so that the free surface of the template is opposite the section of the comminution machine, to which the wearing parts to be replaced are attached,
d) the wearing parts to be replaced are released from their assembly position on the comminution machine and fall onto the template, at which or on which they are held non-positively in a corresponding assembly position,
e) template and comminution machine are positioned with respect to one another so that the wearing parts to be replaced may be removed from the template and new wearing parts may be placed non-positively onto the template,
f) template and comminution machine are positioned with respect to one another so that the free surface of the new wearing parts is opposite the section in the interior of the comminution machine, to which the new wearing parts are to be attached,
g) the new wearing parts are attached to this section of the comminution machine,
h) the stand with template is removed from the interior of the comminution machine.

14. Method according to claim 13, in which in step d), at least some of the wearing parts to be replaced fall into corresponding depressions on the free surface of the template and are received positively there.

15. Method according to claim 13, in which the wearing parts in step d) fall onto the template by releasing screws and in step g) are drawn from the template against the section of the comminution machine by tightening screws.

## Revendications

1. Dispositif de remplacement de pièces d'usure présentant les caractéristiques suivantes :
1.1 un échafaudage (20)
1.2 un gabarit (30) fixé sur l'échafaudage (20),
1.3 le gabarit (30) est réalisé sur sa surface libre de manière à recevoir plusieurs pièces d'usure (40, 42, 44) à changer, par engagement à force et suivant un agencement correspondant à la disposition fonctionnelle des pièces d'usure (40, 42, 44) sur une machine (10) sur laquelle les pièces d'usure (40, 42, 44) doivent être changées.

2. Dispositif de remplacement de pièces d'usure selon la revendication 1, où la surface libre du gabarit (30) présente au moins un évidement (30v) pour la réception par engagement à force d'au moins une pièce d'usure (42).

3. Dispositif de remplacement de pièces d'usure selon la revendication 1, où la surface libre du gabarit (30) présente au moins un évidement (30v) pour la réception par complémentarité de formes d'au moins une pièce d'usure (42).

4. Dispositif de remplacement de pièces d'usure selon la revendication 1, où la surface libre du gabarit (30) présente au moins un évidement (30v) pour la réception par engagement à force de plusieurs pièces d'usure (42).

5. Dispositif de remplacement de pièces d'usure selon la revendication 1, où la surface libre du gabarit (30) présente au moins un évidement (30v) pour la réception par complémentarité de formes de plusieurs pièces d'usure (42).

6. Dispositif de remplacement de pièces d'usure selon la revendication 1, où la surface libre du gabarit (30) présente au moins une traverse (32) faisant saillie de la surface libre pour la réception par engagement à force d'au moins une pièce d'usure (44).

7. Dispositif de remplacement de pièces d'usure selon la revendication 1, où la surface libre du gabarit (30) présente au moins une traverse (32) faisant saillie de la surface libre pour la réception par complémentarité de formes d'au moins une pièce d'usure (44).

8. Dispositif de remplacement de pièces d'usure selon la revendication 1, où la surface libre du gabarit (30) présente au moins une traverse (32) faisant saillie de la surface libre pour la réception par engagement à force de plusieurs pièces d'usure (44).

9. Dispositif de remplacement de pièces d'usure selon la revendication 1, où la surface libre du gabarit (30) présente au moins une traverse (32) faisant saillie de la surface libre pour la réception par complémentarité de formes de plusieurs pièces d'usure (44).

10. Dispositif de remplacement de pièces d'usure selon la revendication 1, où la surface libre du gabarit (30) présente un contour tel qu'après réception par engagement à force de toutes les pièces d'usure (40, 42, 44) correspondantes, un contour de surface formé par les surfaces libres des pièces d'usure (40, 42, 44) correspond au contour de surface d'un section (16) de la machine (10) correspondante, sur laquelle les pièces d'usure (40, 42, 44) doivent être changées.

11. Dispositif de remplacement de pièces d'usure selon la revendication 1, où la position du gabarit (30) peut être réglée indépendamment d'une position de montage de l'échafaudage (20).

12. Dispositif de remplacement de pièces d'usure selon la revendication 1, où la position du gabarit (30) peut être réglée par modification d'une position de montage de l'échafaudage (20).

13. Procédé de remplacement de pièces d'usure sur un broyeur industriel au moyen d'un dispositif de remplacement de pièces d'usure selon l'une des revendications 1 à 12, par application des étapes de travail successives suivantes :
a) le broyeur est ouvert et une section à l'intérieur du broyeur sur laquelle les pièces d'usure à changer sont fixées est dégagée,
b) l'échafaudage est mis en place avec le gabarit à l'intérieur du broyeur,
c) le gabarit et le broyeur sont positionnés l'un par rapport à l'autre de telle manière que la surface libre du gabarit sur laquelle les pièces d'usure à changer sont fixées est opposée à la section du broyeur,
d) les pièces d'usure à changer sont desserrées de leur position de montage sur le broyeur et tombent sur le gabarit, contre lequel ou sur lequel elles sont maintenues par engagement à force dans une position de montage correspondante,
e) le gabarit et le broyeur sont positionnés l'un par rapport à l'autre de manière à pouvoir retirer du gabarit les pièces d'usure à changer et mettre en place de nouvelles pièces d'usure par engagement à force sur le gabarit,
f) le gabarit et le broyeur sont positionnés l'un par rapport à l'autre de manière à opposer à la surface libre des nouvelles pièces d'usure la section à l'intérieur du broyeur que laquelle les nouvelles pièces d'usure doivent être fixées,
g) les nouvelles pièces d'usure sont fixées sur cette section du broyeur,
h) l'échafaudage est retiré avec le gabarit de l'intérieur du broyeur.

14. Procédé selon la revendication 13, où à l'étape d), au moins quelques-unes des pièces d'usure à changer tombent dans des évidements correspondants sur la surface libre du gabarit et y sont logées par complémentarité de formes.

15. Procédé selon la revendication 13, où les pièces d'usure tombent sur le gabarit par desserrage de vis à l'étape d), et sont serrées contre la section du broyeur par serrage de vis à l'étape g).
